# EUROPÄISCHE PATENTSCHRIFT

(11) **EP 3 722 014 B1**
(45) Veröffentlichungstag und Bekanntmachung des Hinweises auf die Patenterteilung: **09.08.2023**
(21) Anmeldenummer: 20163362.5
(22) Anmeldetag: 16.03.2020
(51) Int. Cl.: B08B 3/12, G01F 23/296, G01F 23/24

(54) **ULTRASCHALLGERÄT MIT INTEGRIERTER FÜLLSTANDSERKENNUNG**
ULTRASONIC DEVICE WITH INTEGRATED LEVEL DETECTION
DISPOSITIF À ULTRASONS À DÉTECTION DE NIVEAU DE REMPLISSAGE INTÉGRÉE

(30) Priorität: 11.04.2019 DE 102019109582
(43) Veröffentlichungstag der Anmeldung: 14.10.2020
(73) Patentinhaber: Elma Schmidbauer GmbH, 78224 Singen (DE)
(72) Erfinder: KONZEPT, KLAUS, 78224 Singen (DE)
(74) Vertreter: Patent- und Rechtsanwälte Behrmann Wagner PartG mbB

(56) Entgegenhaltungen:
- EP-A1- 2 559 495
- DE-T2- 69 108 149
- US-A- 5 793 705
- US-A1- 2011 186 155
- US-B1- 6 691 578

## Beschreibung

Die Erfindung betrifft ein Ultraschallgerät zum Reinigen von Reinigungsgut aufweisend eine integrierte Füllstandserkennung durch Heizmittel und/oder Ultraschallwandler des Geräts.

Ultraschall, insbesondere Leistungsultraschall, welcher über ultraschallabstrahlende Oberflächen in Flüssigkeit eingekoppelt wird, kann unter anderem dazu verwendet werden ein in dieser Flüssigkeit befindliches Reinigungsgut mit Ultraschall und ultraschallinduzierter transienter Kavitation zu beaufschlagen. Dadurch können dessen Oberflächen bearbeiten werden, wie zum Beispiel zum Reinigen, Entgraten, Aufrauen oder auch zur gezielten Schädigung beziehungsweise Desintegration.

Aus dem Stand der Technik bekannte Ultraschallgeräte umfassen üblicherweise ein Wannenelement, welches einen Füllraum definiert, der mit einem Reinigungsflüssigkeitsmedium füllbar ist und gegebenenfalls beheizt werden kann. In die Reinigungsflüssigkeit ist das zu bearbeitende Reinigungsgut einlegbar. Die Ultraschallgeräte weisen im Allgemeinen außen an den Wänden oder im Boden des Wannenelements angeordnete Ultraschallwandler beziehungsweise Ultraschallschwinger auf, welche mit einem Generator verbunden sind, der die Ultraschallwandler mit hochfrequenter elektrischer Energie versorgt. Diese wird von den Ultraschallwandlern in mechanische Schwingungen umgewandelt und über Teilflächen bzw. Emissionsabschnitte des Wannenelements als ultraschallabstrahlende Oberfläche in die Flüssigkeit eingekoppelt und abgestrahlt.

Der Einhaltung eines idealen Flüssigkeitsspiegels bzw. Füllstands im Wannenelement kommt für einen optimalen Betrieb des Ultraschallgeräts große Bedeutung zu, auch da bei einem zu geringen Füllstand die Ultraschallwandler Schaden nehmen können. Dies ist insbesondere für Geräte mit integrierten Heizelementen wichtig, da durch die Heizung eine Verdampfung des Flüssigkeitsmediums begünstigt wird. Aus dem Stand der Technik sind daher Steuerungsmittel für die Heizelemente bekannt, mit denen im Sinne einer Zeitschaltuhr der Betrieb der Heizelemente auf eine vordefinierte Zeitspanne begrenzt wird. Das korrekte Einstellen und die Überwachung des Flüssigkeitsspiegels wird manuell durch den Benutzer vorgenommen, insbesondere da ein Vorsehen von zusätzlichen Sensoren im Wannenelement aufgrund möglicher negativer Auswirkungen auf die Funktionsweise des Geräts unerwünscht ist.

Die US 2011/0186155 A1 zeigt einen Flüssigkeitszustandssensor, der dazu konfiguriert ist, den Zustand einer Flüssigkeit in einem Tank eines Ultraschallreinigungssystems zu überwachen, wobei der Flüssigkeitszustandssensor ein Signal erfasst, das von einem Ultraschallgenerator zu einem oder mehreren Ultraschallwandlern gesendet wird, die sich in dem Tank befinden. Dabei kann ein suboptimaler Flüssigkeitspegel oder eine unannehmbar hohe Konzentration gelöster Gase in der Reinigungsflüssigkeit detektiert werden.

Die US 6,691,578 B1 offenbart ein System zur Messung einer Ultraschallaktivität, wobei die Größe und Form einer Änderung des Ultraschallfeldes in einem Gefäß gemessen wird. Die gemessene Ultraschallaktivität wird als Maß für die Leistung eines Ultraschall Reinigungssystems angezeigt und/oder an einen Ultraschallsender zurückgemeldet, um einen Reinigungsprozess zu steuern oder aufrechtzuerhalten.

Die zugrundeliegende Aufgabe der vorliegenden Erfindung ist die aus dem Stand der Technik bekannte Betriebsweise und Überwachung des Flüssigkeitsspiegels zu vereinfachen, ohne den optimalen Betrieb des Ultraschallgeräts negativ zu beeinflussen. Diese Aufgabe wird durch den Gegenstand der unabhängigen Ansprüche gelöst. Die Unteransprüche stellen vorteilhafte Weiterbildungen der vorliegenden Erfindung dar. Die Erfindung adressiert zudem weitere Probleme bzw. schlägt die Lösung zu weiteren Problemen vor, wie aus der nachfolgenden Beschreibung hervorgeht.

In einem ersten Aspekt betrifft die Erfindung ein Ultraschallgerät zum Reinigen von Reinigungsgut, aufweisend die Merkmale des Anspruchs 1.

Die vorliegende Erfindung ermöglicht eine Füllstandserkennung mittels integrierter Bestandteile des Ultraschallgeräts, so dass keine bauliche Veränderung insbesondere des Wannenelements vorgenommen werden muss. Die auf eine bestimmte Ausbildung des Wannenelements optimierte Ausgestaltung des Ultraschallgeräts wird somit nicht negativ beeinflusst. Zudem wird eine automatische Füllstandserkennung durch im Gerät integrierte Mittel bereitgestellt, welche eine vereinfachte Handhabung des Geräts durch den Benutzer ermöglicht.

Bei dem wenigstens einen Ultraschallwandler handelt es sich vorzugsweise um einen an sich bekannten piezokeramischen Wandler, welcher eine piezokeramische Scheibe umfasst, die sich beim Anlegen einer Spannung ausdehnt oder zusammenzieht. Der Wandler ist vorzugsweise von außen an einem Emissionsabschnitt des Wannenelements angeklebt. In einem bevorzugten Ausführungsbeispiel weist das Ultraschallgerät mindestens zwei Ultraschallwandler auf. Diese sind in vordefinierten Emissionsabschnitten des Wannenelements angeordnet, derart, dass vorzugsweise eine gleichmäßiges, nicht statisches Schallfeld in dem Wannenelement entstehen kann.

Die Steuerungsmittel umfassen vorzugsweise einen regelbaren Hochfrequenz-Generator zur Ansteuerung des wenigstens einen Ultraschallwandlers. Dieser wandelt die Netzfrequenz von ca. 50Hz vorzugsweise auf mindestens 20kHz. Des Weiteren umfassen die Steuerungsmittel vorzugsweise eine Regelung für die Heizleistung des Heizelements. Diese kann beispielsweise durch einen an sich bekannten Mikrocontroller erfolgen.

Das Heizelement erstreckt sich vorzugsweise im Wesentlichen horizontal entlang der Seitenwand. Dieses kann von außen an das Wannenelement angebracht sein oder als integraler Bestandteil des Wannenelements ausgebildet sein. Das Heizelement ist vorzugsweise in einem bezogen auf die absolute Tiefe des Wannenelements mittigen Abschnitt der Seitenwand angeordnet. Erfindungsgemäß handelt es sich bei dem Heizelement um ein sogenanntes Positive Temperature Coefficient (PTC)-Heizelement. Es können mehr als ein Heizelement, insbesondere wenigstens zwei Heizelemente vorgesehen sein. Diese sind vorzugsweise in gleicher Höhe bzw. Tiefe entlang der Seitenwand des Wannenelements angeordnet. Alternativ können die Heizelemente auch in unterschiedlicher Höhe bzw. Tiefe im Wannenelement angeordnet sein.

Die Steuerungsmittel sind erfindungsgemäß dazu ausgebildet wenigstens zwischen einem Füllstand über dem Heizelement und einem Füllstand unter dem Heizelement zu differenzieren. Mit einem Füllstand "über" bzw. "unter" dem Heizelement wird hierbei ein Füllstand verstanden, welcher über bzw. unter dem sich vorzugsweise horizontal erstreckenden Heizelement an der das Heizelement aufweisenden Seitenwand des Wannenelements liegt. Im ersten Fall ist das Heizelement in Seitenansicht auf das Wannenelement somit vollständig bedeckt, im zweiten Fall ist das Heizelement somit vollständig freiliegend über der Oberfläche der Flüssigkeit.

Die Steuerungsmittel sind hierbei vorzugsweise derart ausgebildet, dass die Höhe der Leistungsaufnahme durch das Heizelement über eine vordefinierte Zeitspanne gemessen wird. Insbesondere kann ein Leistungsgradient des Heizelements gemessen werden. Hierbei kann insbesondere bei einem PTC-Heizelement als Kaltleiter der Leistungsunterschied zwischen dem sich in Flüssigkeit befindlichen (relativ kälteren) Heizungselement, welches mehr Leistung aufnimmt, gegenüber einem sich außerhalb der Flüssigkeit befindlichen (relativ heißeren) Heizungselement, welches relativ weniger Leistung aufnimmt, detektiert werden. Die Steuerungsmittel können auch ausgebildet sein, die gemessene Leistungsaufnahme der Heizmittel mit vordefinierten Sollwerten zu vergleichen. Diese können beispielsweise in gespeicherten Tabellen hinterlegt sein.

In Kombination mit mehreren Heizelementen, wobei diese auf unterschiedlicher Höhe bzw. Tiefe in dem Wannenelement angeordnet sind, kann mittels der oben beschriebenen Funktionsweise auch eine Füllstandserkennung an unterschiedlichen Höhen jeweils über bzw. unter dem jeweiligen Heizelement erfolgen.

Die Steuerungsmittel sind bevorzugt ferner dazu ausgebildet einen Füllstand knapp über dem Ultraschallwandler und/oder eine leeres Wannenelement (Trockenlauf) zu erkennen. Unter Füllstand knapp über dem Ultraschallwandler wird hierbei ein Füllstand von vorzugsweise ca. 1-10mm, mehr bevorzugt zwischen 1 bis 5mm über dem im Boden angeordneten Emissionsabschnitt des Ultraschallwandlers verstanden.

Die Steuerungsmittel sind hierbei vorzugsweise derart ausgebildet, die Impedanz, d.h. den frequenzabhängigen Wechselstromwiderstand, des Ultraschallwandlers über eine vordefinierte Zeitspanne und/oder über einen vordefinierten Frequenzbereich zu messen. Auch können die Steuerungsmittel ausgebildet sein, die Leistungsaufnahme und die Phasenverschiebung zwischen Spannung und Strom des Ultraschallwandlers über eine vordefinierte Zeitspanne und/oder über einen vordefinierten Frequenzbereich zu messen. Hierbei wird sich der Umstand zunutze gemacht, dass die Impedanz des Ultraschallwandlers nicht nur vom konstruktiven Aufbau des Wandlers, sondern auch vom veränderbaren Füllstand, der Flüssigkeitstemperatur und der Schallkennimpedanz der Flüssigkeit im Wannenelement abhängig ist. Zudem führt die Nichtlinearität der Schallkennimpedanz bei Kavitation zu einer Impedanzänderung. Die Leistungsaufnahme und die Phasenverschiebung zwischen Spannung und Strom eines Ultraschallwandlers, bei einer bestimmten Frequenz, sind somit ebenfalls abhängig vom Füllstand. Die Steuerungsmittel können auch ausgebildet sein, einen oder mehrere der oben genannten gemessenen Parameter des Ultraschallwandlers mit vordefinierten Sollwerten zu vergleichen. Diese können beispielsweise in gespeicherten Tabellen hinterlegt sein.

In einer bevorzugten Ausführungsform sind die Steuerungsmittel zur Regelung des Heizelements und/oder des Ultraschallwandlers in Abhängigkeit eines erkannten Füllstands und/oder in Abhängigkeit der Messung der oben genannten Parameter dieser Geräteelemente ausgebildet. Beispielsweise kann bei Erreichen eines Füllstands unterhalb des Heizelements das Heizelement abgeschaltet oder hinsichtlich seiner Heizleistung herabgeregelt werden. Ebenso kann bei Erreichen eines Füllstands knapp über dem Ultraschallwandler ein Abschalten des Ultraschallwandlers oder ein Reduzieren seiner Ausgangsleistung gegenüber dem Niveau bei normalem Reinigungsbetrieb erfolgen. Bei Auffüllen des Füllstands über die oben genannten Grenzen kann ein Wiedereinschalten des jeweiligen Bauelements oder eine Regelung auf Normalbetrieb erfolgen.

Zur Steuerung der genannten Funktionen des Ultraschallgeräts können die Steuerungsmittel zusätzlich eine integrierte oder separat ausgebildete Steuereinheit wie beispielsweise einen Mikrocontroller aufweisen. Auch können die Steuerungsmittel integrale oder zugeordnete Speichermittel insbesondere für die Speicherung von Vergleichsdaten und/oder der Steuerungsparameter aufweisen. Auch können die Steuerungsmittel eine Eingabe- und/oder Ausgabeeinheit und/oder eine Schnittstelle für eine Eingabe- und/oder Ausgabeeinheit aufweisen, mit der beispielsweise die Steuerungsparameter eingestellt und/oder angepasst werden können.

Die Steuerungsmittel können zusätzlich ausgebildet sein, ein Alarm- oder Hinweissignal in Abhängigkeit eines erkannten Füllstands auszugeben. Dies kann mittels einer zusätzlichen mit den Steuerungsmitteln verbundenen akustischen und/oder visuellen Ausgabeeinrichtung erfolgen.

In einer bevorzugten Ausführungsform sind die Steuerungsmittel und/oder der wenigstens eine Ultraschallwandler ferner zur Messung einer Raumantwort ausgebildet. Hierbei ist der wenigstens eine Ultraschallwandlervorzugsweise als Sender und Empfänger für Ultraschallwellen ausgebildet. Falls das Ultraschallgerät mehrere Ultraschallwandler aufweist, können ein oder mehrere Wandler als Sender oder Empfänger oder alle Wandler als Sender und Empfänger ausgebildet sein.

Unter Raumantwort wird vorliegend eine schallsignaltechnische Rückmeldung auf ein vom Ultraschallwandler als Sender gesendetes Ausgangssignal verstanden. Dieses wird vorzugsweise durch den jeweiligen Ultraschallwandler selbst oder durch einen oder mehrere weitere Ultraschallwandler des Geräts detektiert. Für die Detektion der Rückantwort wird der oder die jeweiligen Sender dann abgeschaltet, sodass eine Messung der Raumantwort ohne Einfluss von Kavitation erfolgen kann.

Die über die jeweiligen Sender und Empfänger ermittelbare Raumantwort hängt von verschiedenen Einflussgrößen ab, wie beispielsweise das verwendete Flüssigkeitsmedium, dessen Füllmenge, dessen Temperatur, die Strömung und/oder die Geometrie des Wannenelements. Veränderungen dieser Einflussgrößen ändern somit die jeweilige, detektierbare Raumantwort.

Die Detektion der Raumantwort kann für verschiedene Leistungsbereiche und/oder Frequenzbereiche erfolgen. Die Detektion der Raumantwort erfolgt zudem vorzugsweise in vordefinierten zeitlichen Intervallen. Die Betrieb der Ultraschallwandler zur Detektion einer Raumantwort unterscheidet sich vorzugsweise von einem Normalbetrieb der Wandler zur Reinigung von eingelegtem Reinigungsgut.

Die Rückantwort auf ein emittiertes Ultraschallsignal kann insbesondere hinsichtlich des Frequenzspektrums, des zeitlichen Verlaufs des Frequenzspektrums und/oder eines (absoluten) Zeitbereichs analysiert werden. Auch kann eine Rückmeldung hinsichtlich der Energie des Wandlers, des Stroms oder der Spannung des jeweiligen Wandlers analysiert werden.

Die Steuerungsmittel sind vorzugsweise ausgebildet die jeweils detektierte Raumantwort zu analysieren und/oder mit vordefinierten oder gespeicherten Vergleichswerten zu vergleichen. Diese können beispielsweise in hinterlegten Vergleichstabellen gespeichert sein. Die Werte in den Vergleichstabellen können auch kontinuierlich während des Lebenszyklus des Ultraschallgeräts adaptiert bzw. aktualisiert werden. Durch die Messung und Analyse können Rückschlüsse auf beispielsweise den Füllstand des Flüssigkeitsmedium, die Temperatur des Flüssigkeitsmediums, eine Beladung mit Reinigungsgut und/oder einen Betriebszustand des Geräts abgeleitet werden. Insbesondere kann ein Normalzustand und ein hiervon abweichender bzw. abnormaler Zustand des Geräts erkannt werden. Beispielsweise können die Raumantwort beeinflussende Parameter erkannt werden, wie Alterungserscheinungen der piezokeramischen Elemente oder Fehler im Schwingungssystem wie beispielsweise eine fehlerhafte Klebeverbindung der Ultraschallwandler am Wannenelement.

In einer bevorzugten Ausführungsform sind Steuerungsmittel vorzugsweise zur Regelung der Heizleistung, der Ultraschall-Leistung und/oder zur Ausgabe eines Benutzersignals in Abhängigkeit der gemessenen Raumantwort ausgebildet. Beispielsweise kann bei Erkennung eines jeweiligen Füllstands eine Aktivierung oder Deaktivierung einzelner Komponenten erfolgen. Auch kann bei Erkennung eines Einsetzens oder eines Vorhandenseins von Reinigungsgut im Wannenelement die Aktivierung der bis dahin nur zur Detektion der Raumantwort geregelten Ultraschallwandler zur Reinigung erfolgen. Bei Detektion von Alterungserscheinungen der einzelnen Komponenten des Ultraschallgeräts kann eine Deaktivierung der jeweiligen Komponenten erfolgen und/oder ein Warnsignal ausgegeben werden.

In einer weiteren bevorzugten Ausführungsform weisen die Steuerungsmittel einen Plausibilitätsalgorithmus auf, welcher vorzugsweise selbstlernend die von den Steuerungsmitteln ausgewerteten Parameter analysiert und auf deren Plausibilität vorzugsweise basierend auf vordefinierten und/oder erlernten Vergleichsparametern auswertet. Die Steuerungsmittel können dabei einen Plausibilitätsalgorithmus jeweils für die einzelnen bauteile- bzw. komponentenbezogenen Parameter wie beispielsweise Parameter des Heizelements, Parameter des/der Ultraschallwandler und/oder Parameter der detektierten Raumantwort oder für eine Kombination der detektierten Parameter aufweisen. Hierdurch kann die Zuverlässigkeit der Auswertung durch die Steuerungsmittel weiter erhöht werden.

In einem weiteren Aspekt betrifft die Erfindung ein Ultraschallgerät zum Reinigen von Reinigungsgut, aufweisend ein Wannenelement mit einem mit Flüssigkeit füllbaren Füllraum und zumindest einem Ultraschallwandler, welcher über ein zugeordneten Emissionsabschnitt vorzugsweise eines Bodenbereichs des Wannenelements Ultraschallwellen in das Wannenelement einkoppelt, Steuerungsmittel zur Ansteuerung des wenigstens einen Ultraschallwandlers, wobei die Steuerungsmittel und/oder der wenigstens eine Ultraschallwandler ferner zur Messung und Auswertung einer Raumantwort ausgebildet sind.

Das erfindungsgemäße Ultraschallgerät ermöglicht hierbei die Detektion und Auswertung einer Raumantwort vorzugsweise mittels des oder der zum Zwecke der Reinigung von Reinigungsgut verbauten Ultraschallwandler(s) des Geräts. Hierdurch kann eine Analyse des Ultraschallgeräts hinsichtlich eines Betriebszustands und/oder eine Füllstandserkennung des Wannenelements erfolgen.

Zur Vermeidung von Wiederholungen wird auf die obige Beschreibung bezüglich des ersten Aspekts der Erfindung verwiesen. Die bezüglich des ersten Aspekts der Erfindung offenbarten Merkmale sollen auch für diesen Aspekt der Erfindung als offenbart gelten und umgekehrt. Das Vorhandensein eines Heizelements in dem Ultraschallgerät ist hierbei optional. Der oder die Ultraschallwandler sind hierbei vorzugsweise in einem Bodenbereich des Wannenelements angeordnet, können aber alternativ aber auch in der Seitenwand des Wannenelements angeordnet sein.

In einer bevorzugten Ausführungsform ist der wenigstens eine Ultraschallwandler als Sender und Empfänger für Ultraschallwellen ausgebildet. In einer weiter bevorzugten Ausführungsform weist das Ultraschallgerät wenigstens zwei oder drei Ultraschallwandler auf, wobei einzelne oder alle Ultraschallwandler als Sender und/oder Empfänger ausgebildet sind.

Der oder die Ultraschallwandler sind hierbei vorzugsweise ausgebildet in einem normalen Reinigungsbetrieb zur Reinigung des Reinigungsguts betrieben zu werden und in einem hiervon vorzugsweise verschiedenen Raumantwortbetrieb zur Messung und Auswertung der Raumantwort.

In einer bevorzugten Ausführungsform sind die Steuerungsmittel dazu ausgebildet, in Abhängigkeit der ausgewerteten Raumantwort einen Betriebszustand, insbesondere eine Alterung von Ultraschallgerätkomponenten und/oder eine Beladung des Füllraums mit Reinigungsgut, und/oder einen Füllstand der Flüssigkeit im Füllraum zu erkennen.

Weitere vorteilhafte Merkmale, Vorteile und Einzelheiten der Erfindung ergeben sich aus der nachfolgenden Beschreibung bevorzugter Ausführungsbeispiele sowie anhand der Figuren. Diese zeigen in:
- **Fig. 1**: eine schematische seitliche Schnittansicht einer bevorzugten Ausführungsform des erfindungsgemäßen Ultraschallgeräts,
- **Fig. 2**: eine grafische Darstellung der Leistungsaufnahme durch das Heizelement des Ultraschallgeräts im mit Flüssigkeit bedeckten und unbedeckten Zustand,
- **Fig. 3a, 3b**: eine grafische Darstellung unterschiedlicher Messwerte für die Impedanz und die Phasenverschiebung eines Ultraschallwandlers des Geräts, und
- **Fig. 4**: eine schematische seitliche Schnittansicht einer bevorzugten Ausführungsform eines Ultraschallgeräts zur Messung und Analyse der Raumantwort.

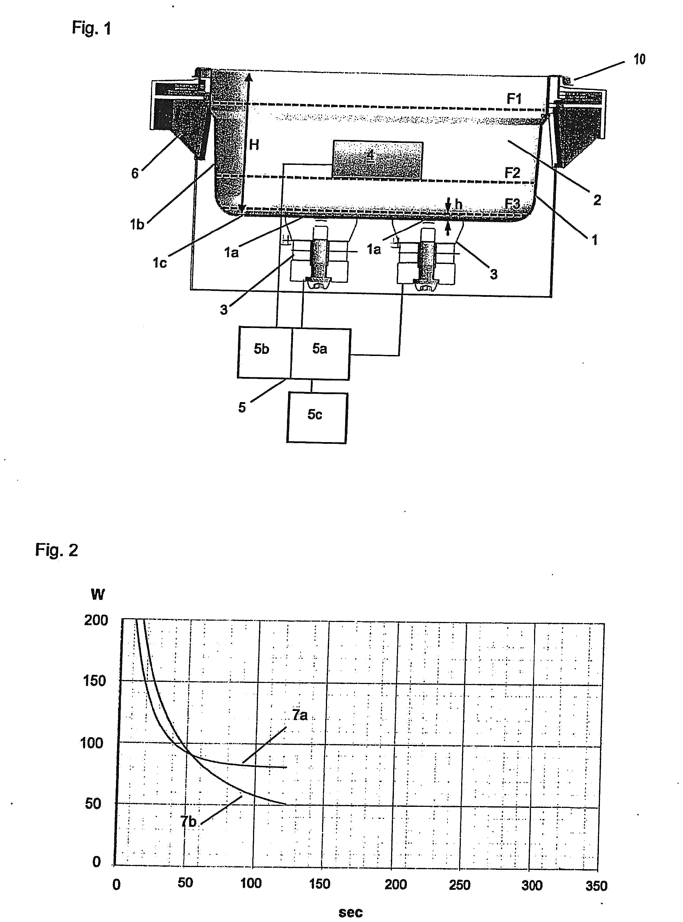

**Fig. 1** zeigt schematisch ein bevorzugtes Ausführungsbeispiel des Erfindungsgemäßen Ultraschallgeräts 10. Das Gerät weist ein Wannenelement 1 mit einem mit Flüssigkeit füllbaren Füllraum 2 auf, in welchen ein Reinigungsgut zur Reinigung eingelegt werden kann. Das Wannenelement 1 ist an einem Gestell oder Gehäuse 6 befestigt bzw. gelagert. Das Gerät 10 kann einen (nicht gezeigten) Korb für Reinigungsgut aufweisen, welcher in das Wannenelement 1 eingelegt oder eingehängt werden kann. Das Wannenelement 1 weist eine umlaufende Seitenwand 1b und einen vorzugsweise im Wesentlichen planen Bodenbereich 1c auf.

Das Gerät 10 weist wenigstens einen, mehr bevorzugt wenigstens 2 Ultraschallwandler 3 auf, welche im Bodenbereich 1c des Wannenelements 1 angeordnet sind. Der Bodenbereich 1c weist hierbei jeweils einen Emissionsabschnitt 1a auf, mittels welchem Ultraschallwellen in das Wannenelement 1 und somit in die Flüssigkeit im Füllraum 2 eingekoppelt werden können. Der jeweilige Emissionsabschnitt 1a ist dabei vorzugsweise integral mit dem Bodenbereich 1c des Wannenelements 1 ausgebildet.

An der Seitenwand 1b des Wannenelements 1 ist ein Heizelement 4 angeordnet, welches zum Erwärmen einer im Füllraum 2 befindlichen Flüssigkeit dient. Dieses erstreckt sich vorzugsweise im Wesentlichen horizontal in einem etwa mittig angeordneten Bereich bezogen auf eine maximale Höhe bzw. Tiefe H des Wannenelements 1. Das Heizelement 4 kann außen an dem Wannenelement 1 angeordnet sein, beispielsweise mit diesem verklebt, oder integral mit dem Wannenelement ausgebildet sein. Bei dem Heizelement 4 handelt ist sich vorzugsweise um ein PTC-Heizelement.

Das Gerät 10 weist weiterhin Steuerungsmittel 5 auf, zur Ansteuerung der Ultraschallwandler 3 und des Heizelements 4. Die Steuerungsmittel 5 umfassen dabei einen regelbaren Hochfrequenz-Generator 5a zur Ansteuerung der Ultraschallwandler 3 und eine Steuerung 5b für das Heizelement 4. Die Steuerungselemente 5a,5b sind vorzugsweise in einer Steuereinheit 5 integral ausgebildet, können aber auch als separate Einheiten vorliegen.

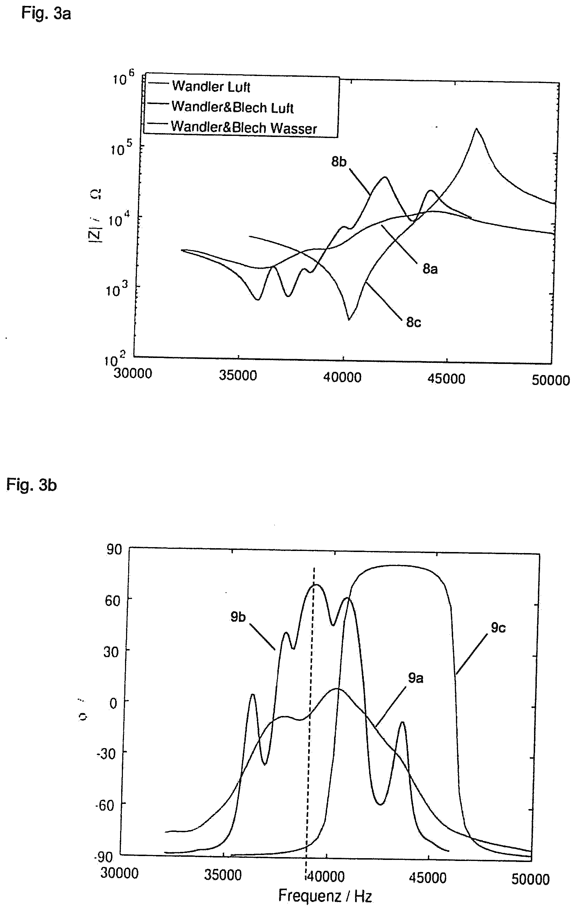

Erfindungsgemäß sind die Steuerungsmittel 5 ausgebildet eine elektrische Heizleistung des Heizelements 4 und/oder eine Ultraschall-Leistung des Ultraschallwandlers 3 zur Erkennung eines Füllstands F1,F2,F3 der Flüssigkeit im Füllraum 2 auszuwerten. Dies wird im Folgenden mit Bezug auf die weiteren Fig. 2 und Fig. 3a,3b näher beschrieben.

**Fig. 2** zeigt eine grafische Darstellung der unterschiedlichen Leistungsaufnahmen (W/t) durch das Heizelement 4 des Ultraschallgeräts 10 im mit Flüssigkeit bedeckten Zustand und unbedeckten Zustand des Heizelements. Der Graph 7a repräsentiert hierbei die Leistungsaufnahme des PTC-Heizelements 4 über eine vordefinierte Zeit von ca. 120 Sekunden bei regulärem Heizbetrieb nach Anschalten der Heizung in Flüssigkeit, d.h. bei einem Füllstand F1 (vgl. Fig. 1) über dem Heizelement 4. Der Graph 7b repräsentiert die Leistungsaufnahme des PTC-Heizelements 4 über die vordefinierte Zeit von ca 120 Sekunden bei einem regulären Heizbetrieb, wobei der Füllstand in der genannten Zeitspanne auf einen Füllstand F2 unter das Heizelement 4 absinkt und somit das Heizelement 4 nicht mehr von Flüssigkeit bedeckt ist.

Der unterschiedliche Kennlinienverlauf 7a,7b ist darauf zurückzuführen, dass das PTC-Heizelement 4 im kalten, d.h. im von Flüssigkeit bedeckten Zustand einen niedrigeren Widerstand aufweist, was zu einem entsprechend höheren Stromfluss und damit zu einer höherer Heizleistung führt. Bei steigender Temperatur des PTC-Heizelements 4 steigt auch dessen Widerstand, wodurch der Stromfluss und damit die Heizleistung sinkt. Das PTC-Heizelement 4 ist durch diese Eigenschaft auch selbstregelnd, so dass eine Überhitzung des Elements verhindert wird. Mittels der Steuerungsmittel 5 bzw. der Steuerung 5b des Heizelements 4 kann eine zusätzliche Regelung des Heizelements 4 erfolgen.

Durch die Steuerungsmittel 5 wird die Höhe der Leistungsaufnahme durch das Heizelement 4 vorzugsweise kontinuierlich gemessen bzw. überwacht. Hierbei kann beispielsweise eine Messung über eine vordefinierte Zeitspanne und/oder ein Vergleich mit vordefinierten Sollwerten erfolgen. Zum Vergleich mit vordefinierten Sollwerten und/oder Vergleichswertetabellen können die Steuerungsmittel 5 eine Rechen- und/oder Speichereinheit 5c aufweisen. Die Steuerungsmittel 5 können aufgrund der durchgeführten Messung und/oder vorhandener Vergleichswerte eine Auswertung vornehmen, ob der Füllstand über dem Heizelement 4 (Füllstand F1 in Fig. 1) oder knapp bzw. direkt unter dem Heizelement 4 liegt (Füllstand F2 in Fig. 1).

**Fig. 3a, 3b** zeigen eine grafische Darstellung unterschiedlicher Messwerte für die Impedanz und die Phasenverschiebung zwischen Spannung und Strom an einem Ultraschallwandler 3.

Die in Fig. 3a gezeigten Kennlinien zeigen den Verlauf der frequenzabhängigen Impedanzänderungen beim Betrieb eines Ultraschallwandlers 3 des Geräts 10. Die Kennlinie 8c zeigt eine frequenzabhängige Impedanzänderung des Ultraschallwandlers, wenn dieser mit keinem weiteren Medium außer Luft in Kontakt ist. Dies entspricht der konstruktionsbedingten Impedanz des Ultraschallwandlers 3. Die Kennlinien 8a und 8b zeigen die jeweilige frequenzabhängige Impedanzänderung des Wandlers 3 bei Kontakt mit dem leeren Wannenelement 1 (eingebauter Zustand im Gerät 10) und bei Kontakt mit einem befüllten Wannenelement 1 (Füllstand F1 in Fig. 1).

Die in Fig. 3b gezeigten Kennlinien zeigen den Verlauf der frequenzabhängigen Phasenverschiebung zwischen anliegender Spannung und Strom des Ultraschallwandlers 3. Die Kennlinie 9c zeigt eine frequenzabhängige Phasenverschiebung des Ultraschallwandlers, wenn dieser mit keinem weiteren Medium außer Luft in Kontakt ist. Die Kennlinien 9a und 9b zeigen die jeweilige frequenzabhängige Phasenverschiebung des Wandlers 3 bei Kontakt mit dem leeren Wannenelement 1 (eingebauter Zustand im Gerät 10) und bei Kontakt mit einem befüllten Wannenelement 1 (Füllstand F1 in Fig. 1).

Wie sich aus den gezeigten Kennlinienverläufen entnehmen lässt, ändert sich sowohl die Impedanz des Ultraschallwandlers 3 als auch die Phasenverschiebung zwischen Spannung und Strom des Ultraschallwandlers 3 bei einer bestimmten Frequenz mit dem jeweiligen Flüssigkeitstand im Wannenelement 1. Hierdurch können Rückschlüsse auf den Füllstand im Wannenelement 1 gezogen werden.

Durch die Steuerungsmittel 5 wird die Ultraschall-Leistung des Ultraschallwandlers 3 und insbesondere die gezeigte frequenzabhängige Impedanz und/oder die Phasenverschiebung des Ultraschallwandlers 3 vorzugsweise kontinuierlich gemessen bzw. überwacht. Auch hierbei kann beispielsweise eine Messung über eine vordefinierte Zeitspanne und/oder ein Vergleich mit vordefinierten Sollwerten erfolgen. Die Messung kann dabei über einen jeweils vordefinierten Frequenzbereich erfolgen. Dies kann wie bereits oben für das Heizelement beschrieben mittels der Rechen- und/oder Speichereinheit 5c erfolgen.

Die Steuerungsmittel 5 können aufgrund der durchgeführten Messung und/oder vorhandener Vergleichswerte eine Auswertung vornehmen, ob das Wannenelement 1 gefüllt ist (Füllstand F1 oder F2 in Fig. 1) oder ob das Wannenelement 1 noch bis knapp bzw. direkt über dem im Bodenbereich angeordneten Ultraschallwandler 3 gefüllt ist (Füllstand F3 in Fig. 1). Die verbleibende Füllstandshöhe h liegt hierbei vorzugsweise zwischen 1 bis 10mm, mehr bevorzugt zwischen 1 bis 5mm. Auch kann ein leeres Wannenelement 1 erkannt werden.

Die Steuerungsmittel 5 können zudem dazu ausgebildet sein, durch Messung und/oder Interpolation basierend auf aktuellen und/oder hinterlegten Vergleichswerten zu den in Fig. 1 gezeigten Füllstandshöhen F1, F2, F3 zusätzliche Füllstandshöhen im Wannenelement 1 zu erkennen. Hierdurch kann eine noch genauere Füllstandserkennung bzw. -Messung bereitgestellt werden.

Die Steuerungsmittel 5 sind vorzugsweise ausgebildet, die Leistung bzw. Stärke des Heizelements 4 und/oder die Leistung bzw. Stärke der Ultraschallwandler 3 in Abhängigkeit des erkannten Füllstands zu regeln. Insbesondere kann bei Erreichen eines Füllstands F2 unter dem Heizelement 4 eine Drosselung und/oder Abschaltung der Heizleistung des Heizelements 4 erfolgen. Bei Erreichen eines Füllstands F3 kann zur Vermeidung eines Trockenlaufs und der Beschädigung der Ultraschallwandler 3 eine Drosselung und/oder Abschaltung der Leistung der Ultraschallwandler 3 erfolgen. Bei Erkennung eines leeren Wannenelements 1 können die Steuerungsmittel 5 ausgebildet sein, die Aktivierung der Ultraschallwandler 3 und/oder des Heizelements 4 zu verhindern.

Die Steuerungsmittel 5 können zudem eine akustische und/oder optische Ausgabeeinheit 5c aufweisen, mittels derer in Abhängigkeit eines erkannten Füllstands ein Alarm- oder Hinweissignal ausgegeben werden kann. Beispielsweise kann ein Benutzer darauf hingewiesen werden, dass ein niedriger Füllstand vorliegt und zusätzliche Flüssigkeit nachgefüllt werden soll.

Die Steuerungsmittel 5 können zudem einen Plausibilitätsalgorithmus aufweisen, welcher die von den Steuerungsmitteln 5 ausgewerteten Parameter analysiert und auf deren Plausibilität vorzugsweise basierend auf vordefinierten oder erlernten Vergleichsparametern auswertet. Diese Auswertung kann kontinuierlich während des Betriebs des Geräts 10 und insbesondere während einer Messung der jeweiligen Parameter erfolgen. Der Plausilbiitätsalgorithmus kann dabei ein selbstlernender Algorithmus sein.

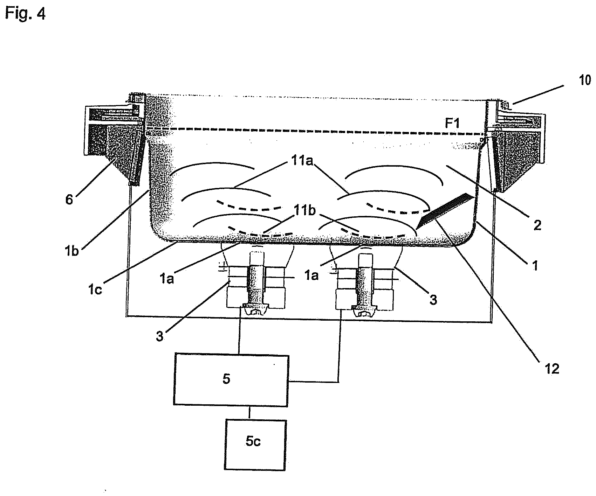

**Fig. 4** zeigt eine schematische seitliche Schnittansicht einer bevorzugten Ausführungsform eines erfindungsgemäßen Ultraschallgeräts 10 zur Messung einer Raumantwort. Der Aufbau entspricht dabei im Wesentlichen dem Aufbau des Ausführungsbeispiels gemäß Fig. 1, wobei das Vorhandensein eines Heizelements 4 (hier nicht dargestellt) optional ist.

Das Ultraschallgerät 10 weist zwei Ultraschallwandler 3 auf, welche vorzugsweise im Bodenbereich 1c des Wannenelements 1 angeordnet sind. Die Ultraschallwandler 3 können alternativ auch in der umlaufenden Seitenwand 1b angeordnet sein. Es kann auch lediglich ein Ultraschallwandler 3 vorgesehen sein.

Die Ultraschallwandler 3 sind im gezeigten Ausführungsbeispiel beide als Sender und Empfänger für Ultraschallwellen ausgebildet, um eine Raumantwort auf ein von den Ultraschallwandlern 3 erzeugtes Ultraschallsignal zu messen. In einer alternativen Ausführungsform kann ein Ultraschallwandler als Sender und ein weiterer Ultraschallwandler als Empfänger für die Raumantwort fungieren.

Gemäß der Erfindung wird in einem Raumantwortbetrieb der Ultraschallwandler 3, welcher sich vorzugsweise von dem normalen Reinigungsbetrieb der Wandler zur Reinigung eines eingelegten Reinigungsguts 12 unterscheidet, ein Ausgangssignal 11a von den jeweiligen Wandlern 3 emittiert. Das Ausgangssignal 11a kann dabei in vordefinierten zeitlichen Intervallen emittiert und/oder in unterschiedlichen oder gleichbleibenden Frequenz- und/oder Leistungsbereichen der Wandler liegen. Es kann eine beliebige, vorzugsweise vordefinierte Modulation des Ausgangssignal 11a erfolgen. Nach dem Emittieren des jeweiligen Signals 11a werden die Ultraschallwandler 3 als Empfänger betrieben, um eine auf das Ausgangssignal 11a folgende Raumantwort 11b als Echo zu detektierten.

Die hierbei ermittelbare Raumantwort 11b hängt von verschiedenen Einflussgrößen des Systems ab, wie beispielsweise das verwendete Flüssigkeitsmedium, dessen Füllmenge, dessen Temperatur, die Strömung und/oder die Geometrie des Wannenelements 1. Veränderungen dieser Einflussgrößen ändern somit die jeweilige, detektierbare Raumantwort 11b. Auch ist die detektierbare Raumantwort 11b im Falle eines Vorhandenseins eines Reinigungsguts 12 in dem befüllten Wannenelement 1 deutlich verschiedenen von der Raumantwort eines befüllten Wannenelements 1 ohne darin platziertes Reinigungsgut 12.

Die Steuerungsmittel 5 sind dazu ausgebildet die jeweils detektierte Raumantwort 11b zu analysieren und/oder mit vordefinierten oder gespeicherten Vergleichswerten zu vergleichen. Dies kann insbesondere hinsichtlich des gemessenen Frequenzspektrums, des zeitlichen Verlaufs des Frequenzspektrums und/oder eines (absoluten) Zeitbereichs der Raumantwort 11b erfolgen. Auch kann eine Messung einer Rückantwort hinsichtlich der Energie des Wandlers 3, des Stroms oder der Spannung des jeweiligen Wandlers 3 erfolgen.

Zur Auswertung der jeweiligen Raumantwort 11b können die Steuerungsmittel 5 auch auf hinterlegte Vergleichswerte oder Wertetabellen zurückgreifen. Die hinterlegten Werte können dabei auch während eines Lebenszyklus des Ultraschallgeräts 10 aktualisiert werden. Auch können die Steuerungsmittel 5 ausgebildet sein, zu Beginn des Lebenszyklus des Geräts 10 einen Lernmodus zur Ermittlung einer idealen gerätespezifischen Raumantwort 11b bei optimalen Betrieb durchzuführen.

Durch die Messung und Auswertung der Raumantwort 11b können Rückschlüsse auf beispielsweise den Füllstand des Flüssigkeitsmediums, die Temperatur des Flüssigkeitsmediums, eine Beladung mit Reinigungsgut 12 und/oder einen Betriebszustand des Geräts 10 abgeleitet werden. Insbesondere kann ein Normalzustand und ein hiervon abweichender bzw. abnormaler Zustand des Geräts erkannt werden.

Die Steuerungsmittel 5 können anschließend eine Regelung des Geräts 10 bzw. der Gerätekomponenten basierend auf der vorgenommenen Auswertung der Raumantwort 11b veranlassen. Insbesondere können die Steuerungsmittel 5 eine Regelung der Ultraschall-Leistung der Wandler 3 und/oder die Ausgabe eines Alarm- oder Hinweissignals in Abhängigkeit der gemessenen Raumantwort 11b veranlassen. Auch kann bei vorhandenem Heizelement eine Steuerung der Heizleistung in Abhängigkeit der Raumantwort 11b erfolgen.

Wie zuvor bezogen auf das Ausführungsbeispiel gemäß Fig. 1 beschrieben, können die Steuerungsmittel 5 zudem einen Plausibilitätsalgorithmus aufweisen, welcher vorzugsweise selbstlernend die von den Steuerungsmitteln ausgewerteten Parameter analysiert und auf deren Plausibilität vorzugsweise basierend auf vordefinierten und/oder erlernten Vergleichsparametern auswertet.

## Patentansprüche

1. Ultraschallgerät (10) zum Reinigen von Reinigungsgut, aufweisend ein Wannenelement (1) mit einem mit Flüssigkeit füllbaren Füllraum (2) und zumindest einem Ultraschallwandler (3), welcher über einen zugeordneten Emissionsabschnitt (1a) im Bodenbereich des Wannenelements (1) Ultraschallwellen in das Wannenelement einkoppelt,
wenigstens ein Heizelement (4) zum Erwärmen der in dem Füllraum (2) befindlichen Flüssigkeit, und
Steuerungsmittel (5) zur Ansteuerung des Ultraschallwandlers (3) und des Heizelements (4),
**dadurch gekennzeichnet, dass**
das Heizelement (4) in einer Seitenwand (1b) des Wannenelements (1) angeordnet ist und als ein PTC-Heizelement mit einem temperaturabhängigen Widerstand ausgebildet ist, wobei die Steuerungsmittel (5) ausgebildet sind, eine elektrische Heizleistung des Heizelements (4) zur Differenzierung wenigstens zwischen einem Füllstand (F1) über dem Heizelement (4) und einem Füllstand (F2) unter dem Heizelement der Flüssigkeit im Füllraum (2) auszuwerten.

2. Ultraschallgerät nach Anspruch 1, wobei die Steuerungsmittel (5) ausgebildet sind, zur Erkennung des Füllstands (F1,F2,F3) der Flüssigkeit im Füllraum (2) zusätzlich eine Ultraschall-Leistung des Ultraschallwandlers (3) auszuwerten.

3. Ultraschallgerät nach Anspruch 1 oder 2, wobei die Steuerungsmittel (5) zur Regelung der Heizleistung, der Ultraschall-Leistung und/oder zur Ausgabe eines Alarmsignals in Abhängigkeit eines erkannten Füllstands (F1,F2,F3) ausgebildet sind.

4. Ultraschallgerät nach einem der vorhergehenden Ansprüche, wobei das Heizelement (4) ein PTC-Heizelement ist, welches sich horizontal entlang der Seitenwand (1b) des Wannenelements (1) erstreckt.

5. Ultraschallgerät nach einem der vorhergehenden Ansprüche, wobei die Steuerungsmittel (5) ausgebildet sind, die Höhe der Leistungsaufnahme durch das Heizelement (4) über eine vordefinierte Zeitspanne zu messen und/oder die gemessene Leistungsaufnahme mit vordefinierten Sollwerten zu vergleichen.

6. Ultraschallgerät nach einem der vorhergehenden Ansprüche, wobei die Steuerungsmittel (5) ausgebildet sind, einen Füllstand (F3) knapp über dem Ultraschallwandler (3) zu erkennen.

7. Ultraschallgerät nach einem der vorhergehenden Ansprüche 2 bis 6, wobei die Steuerungsmittel (5) ausgebildet sind, die Impedanz des Ultraschallwandlers (3) und/oder die Phasenverschiebung über eine vordefinierte Zeitspanne und/oder über einen vordefinierten Frequenzbereich zu messen.

8. Ultraschallgerät nach Anspruch 7, wobei die Steuerungsmittel (5) ausgebildet sind, die Impedanz des Ultraschallwandlers (3) und/oder die Phasenverschiebung mit vordefinierten Sollwerten zu vergleichen.

9. Ultraschallgerät nach einem der vorhergehenden Ansprüche, wobei die Steuerungsmittel (5) und/oder der wenigstens eine Ultraschallwandler (3) ferner zur Messung einer Raumantwort ausgebildet sind, insbesondere wobei der wenigstens eine Ultraschallwandler (3) als Sender und Empfänger für Ultraschallwellen ausgebildet ist.

10. Ultraschallgerät nach Anspruch 9, wobei die Steuerungsmittel (5) derart ausgebildet sind, einen Füllstand (F1 ,F2,F3) der Flüssigkeit im Füllraum (2), eine Beladung des Füllraums mit Reinigungsgut und/oder Betriebszustand des Ultraschallgeräts (10) in Abhängigkeit der gemessenen Raumantwort zu erkennen.

11. Ultraschallgerät nach Anspruch 9 oder 10, wobei die Steuerungsmittel (5) zur Regelung der Heizleistung, der Ultraschall-Leistung und/oder zur Ausgabe eines Benutzersignals in Abhängigkeit der gemessenen Raumantwort ausgebildet sind.

12. Ultraschallgerät nach Anspruch 9 bis 11, wobei die Steuerungsmittel (5) ausgebildet sind, eine Rückantwort auf ein ausgegebenes Ultraschallsignal des Ultraschallwandlers (3) hinsichtlich Frequenzspektrum, dessen zeitlichem Verlauf und/oder eines absoluten Zeitbereichs für die Rückantwort auszuwerten.

13. Ultraschallgerät nach einem der vorhergehenden Ansprüche, wobei die Steuerungsmittel (5) einen Plausibilitätsalgorithmus aufweisen, welcher vorzugsweise selbstlernend die von den Steuerungsmitteln ausgewerteten Parameter analysiert und auf deren Plausibilität vorzugsweise basierend auf vordefinierten oder erlernten Vergleichsparametern auswertet.

## Claims

1. An ultrasonic device (10) for cleaning material to be cleaned, said ultrasonic device (10) comprising a tank element (1) having a filling chamber (2) fillable with liquid and at least one ultrasonic transducer (3) which couples ultrasonic waves into the tank element via an assigned emission section (1a) in the bottom area of the tank element (1),
at least one heating element (4) for heating the liquid in the filling chamber (2), and
control means (5) for controlling the ultrasonic transducer (3) and the heating element (4),
**characterized in that**
the heating element (4) is arranged in a lateral wall (1b) of the tank element (1) and is designed as a PTC heating element having a temperature-dependent resistance, the control means (5) being designed to evaluate an electrical heating power of the heating element (4) for differentiate at least between a filling level (F1) of the liquid in the filling chamber (2) above the heating element (4) and a filling level (F2) of the liquid in the filling chamber (2) below the heating element.

2. The ultrasonic device according to claim 1, wherein the control means (5) are designed to evaluate additionally an ultrasonic power of the ultrasonic transducer (3) in order to detect the filling level (F1, F2, F3) of the liquid in the filling chamber (2).

3. The ultrasonic device according to claim 1 or 2, wherein the control means (5) are designed to regulate the heating power, the ultrasonic power and/or to output an alarm signal as a function of a detected filling level (F1, F2, F3).

4. The ultrasonic device according to any one of the preceding claims, wherein the heating element (4) is a PTC heating element which extends horizontally along the lateral wall (1b) of the tank element (1).

5. The ultrasonic device according to any one of the preceding claims, wherein the control means (5) are designed to measure the amount of power consumed by the heating element (4) for a predefined period of time and/or to compare the measured power consumption with predefined target values.

6. The ultrasonic device according to any one of the preceding claims, wherein the control means (5) are designed to detect a filling level (F3) slightly above the ultrasonic transducer (3).

7. The ultrasonic device according to any one of preceding claims 2 to 6, wherein the control means (5) are designed to measure the impedance of the ultrasonic transducer (3) and/or the phase shift for a predefined period of time and/or across a predefined frequency range.

8. The ultrasonic device according to claim 7, wherein the control means (5) are designed to compare the impedance of the ultrasonic transducer (3) and/or the phase shift with predefined target values.

9. The ultrasonic device according to any one of the preceding claims, wherein the control means (5) and/or the at least one ultrasonic transducer (3) is/are furthermore designed to measure a room response, in particular, wherein the at least one ultrasonic transducer (3) is designed as emitter and receiver for ultrasonic waves.

10. The ultrasonic device according to claim 9, wherein the control means (5) are designed to detect a filling level (F1, F2, F3) of the liquid in the filling chamber (2), whether the filling chamber is loaded with material to be cleaned, and/or an operating state of the ultrasonic device (10) as a function of the measured room response.

11. The ultrasonic device according to claim 9 or 10, wherein the control means (5) are designed to regulate the heating power, the ultrasonic power and/or to output a user signal as a function of the measured room response.

12. The ultrasonic device according to any one of claims 9 to 11, wherein the control means (5) are designed to evaluate a reply to an outputted ultrasonic signal of the ultrasonic transducer (3) with regard to frequency spectrum, its temporal course and/or an absolute time range for the reply.

13. The ultrasonic device according to any one of the preceding claims, wherein the control means (5) have a plausibility algorithm which, preferably in a self-learning manner, analyzes the parameters evaluated by the control means and evaluates them regarding their plausibility, preferably based on predefined or learned comparison parameters.

## Revendications

1. Dispositif à ultrasons (10) pour nettoyer un matériau à nettoyer, ledit dispositif à ultrasons (10) comprenant un élément de cuve (1) ayant une chambre de remplissage (2) capable d'être remplie d'un liquide et au moins un transducteur ultrasonore (3) qui alimente l'élément de cuve en ondes ultrasonores via une partie d'émission (1a) attribuée dans la zone de fond de l'élément de cuve (1),
au moins un élément chauffant (4) pour chauffer le liquide dans la chambre de remplissage (2), et
des moyens de contrôle (5) pour commander le transducteur ultrasonore (3) et l'élément chauffant (4),
**caractérisé en ce que**
l'élément chauffant (4) est disposé dans une paroi latérale (1b) de l'élément de cuve (1) et est conçu comme élément chauffant CTP ayant une résistance dépendante de la température, les moyens de contrôle (5) étant conçus pour évaluer une puissance de chauffage électrique de l'élément chauffant (4) pour la différenciation au moins entre un niveau de remplissage (F1) du liquide dans la chambre de remplissage (2) au-dessus de l'élément chauffant (4) et un niveau de remplissage (F2) du liquide dans la chambre de remplissage (2) au-dessous de l'élément chauffant.

2. Dispositif à ultrasons selon la revendication 1, dans lequel les moyens de contrôle (5) sont conçus pour évaluer en outre une puissance ultrasonore du transducteur ultrasonore (3) pour détecter le niveau de remplissage (F1, F2, F3) du liquide dans la chambre de remplissage (2).

3. Dispositif à ultrasons selon la revendication 1 ou 2, dans lequel les moyens de contrôle (5) sont conçus pour régler la puissance de chauffage, la puissance ultrasonore et/ou pour émettre un signal d'alarme en fonction d'un niveau de remplissage (F1, F2, F3) détecté.

4. Dispositif à ultrasons selon l'une quelconque des revendications précédentes, dans lequel l'élément chauffant (4) est un élément chauffant CTP qui s'étend horizontalement le long de la paroi latérale (1b) de l'élément de cuve (1).

5. Dispositif à ultrasons selon l'une quelconque des revendications précédentes, dans lequel les moyens de contrôle (5) sont conçus pour mesurer la quantité de la puissance absorbée par l'élément chauffant (4) pendant une période de temps prédéfinie et/ou pour comparer la puissance absorbée mesurée avec des valeurs de consigne prédéfinies.

6. Dispositif à ultrasons selon l'une quelconque des revendications précédentes, dans lequel les moyens de contrôle (5) sont conçus pour détecter un niveau de remplissage (F3) juste au-dessus du transducteur ultrasonore (3).

7. Dispositif à ultrasons selon l'une quelconque des revendications précédentes 2 à 6, dans lequel les moyens de contrôle (5) sont conçus pour mesurer l'impédance du transducteur ultrasonore (3) et/ou le déphasage pendant une période de temps prédéfinie et/ou dans une gamme de fréquences prédéfinie.

8. Dispositif à ultrasons selon la revendication 7, dans lequel les moyens de contrôle (5) sont conçus pour comparer l'impédance du transducteur ultrasonore (3) et/ou le déphasage avec des valeurs de consigne prédéfinies.

9. Dispositif à ultrasons selon l'une quelconque des revendications précédentes, dans lequel les moyens de contrôle (5) et/ou l'au moins un transducteur ultrasonore (3) est/sont conçu(s) en outre pour mesurer la réponse d'espace, notamment, dans lequel l'au moins un transducteur ultrasonore (3) est conçu comme émetteur et récepteur pour des ondes ultrasonores.

10. Dispositif à ultrasons selon la revendication 9, dans lequel les moyens de contrôle (5) sont conçus pour détecter un niveau de remplissage (F1, F2, F3) du liquide dans la chambre de remplissage (2), un chargement de la chambre de remplissage avec un matériau à nettoyer et/ou un état de fonctionnement du dispositif à ultrasons (10) en fonction de la réponse d'espace mesurée.

11. Dispositif à ultrasons selon la revendication 9 ou 10, dans lequel les moyens de contrôle (5) sont conçus pour régler la puissance de chauffage, la puissance ultrasonore et/ou pour émettre un signal d'utilisateur en fonction de la réponse d'espace mesurée.

12. Dispositif à ultrasons selon l'une quelconque des revendications 9 à 11, dans lequel les moyens de contrôle (5) sont conçus pour évaluer une réponse à un signal ultrasonore du transducteur ultrasonore (3) en ce qui concerne un spectre de fréquences, son déroulement temporel et/ou une plage de temps absolue pour la réponse.

13. Dispositif à ultrasons selon l'une quelconque des revendications précédentes, dans lequel les moyens de contrôle (5) ont un algorithme de plausibilité qui, de préférence par autoapprentissage, analyse les paramètres évalués par les moyens de contrôle et les évalue quant à leur plausibilité, de préférence sur la base de paramètres de comparaison prédéfinis ou appris.
